# EUROPEAN PATENT APPLICATION

(11) **EP 3 569 524 A1**
(43) Date of publication of application: **20.11.2019**
(21) Application number: 17892026.0
(22) Date of filing: 16.01.2017
(51) Int. Cl.: B65G 1/04

(54) **METHOD FOR CARRYING GOODS BY ROBOT**

(71) Applicant: Zhejiang Guozi Robot Technology Co., Ltd., Hangzhou, Zhejiang 310053 (CN)
(72) Inventor: WU, Weifeng, Hangzhou Zhejiang 310053 (CN); TAO, Yikun, Hangzhou Zhejiang 310053 (CN); ZHENG, Hongbo, Hangzhou Zhejiang 310053 (CN); ZHU, Lingfen, Hangzhou Zhejiang 310053 (CN)
(74) Representative: LKGLOBAL Lorenz & Kopf PartG mbB Patentanwälte
(86) International application number: PCT/CN2017/071288
(87) International publication number: WO 2018/129740

(57) **Abstract**

A method for carrying goods by a robot, which relates to the field of warehousing and logistics. The method comprises the following steps: provide a carrying robot and a shelf (4), the carrying robot comprising a drive unit (1), a container storage unit (2) and a container transmission unit (3), the drive unit (1) carrying the container storage unit (2) and the container transmission unit (3) to jointly move, and each of the container storage unit (2) and the shelf (4) comprising one or more container storage spaces; the carrying robot autonomously moves to a target shelf (4) according to a good delivery instruction, the container transmission unit (3) obtains a container (5) from a container storage space specified according to the good delivery instruction in the shelf (4) and transmits the container (5) to another container storage space specified according to the good delivery instruction in the container storage unit (2); if the instruction contains a same shelf goods delivery instruction, repeat the good delivery step, if the instruction contains another shelf goods delivery instruction, autonomously move to another shelf, and repeat the goods delivery step; and after all goods delivery instructions are implemented, the carrying robot carries the obtained contents and autonomously moves a goods inspection station. In the method, a variety of goods can be transported in a single round, the working efficiency is high, and the energy consumption is low.

## Description

### FIELD

The present disclosure relates to the field of automated warehousing and logistics, and in particular to a method for transporting goods by a robot.

### BACKGROUND

Robots are used for transport in the field of automatic material handling, which has many advantages such as high automation, high flexibility, high safety and reliability, high efficiency, and convenient maintenance. Thus, it is widely used in logistics and transportation places in the automotive manufacturing industry, food industry, tobacco industry, engineering machinery and the like, and also used in various public service places such as airports, hospitals and office buildings. Because of these advantages, the transport robot plays an important role in the modern logistics system, becoming a key member in the "machine substituting for labor" project.

In 2011, the corporation KIVA proposed a transport method of "shelf-to-person" and achieved great success, referring to patent US7850413B2 for detailed structure and method. Since then, many similar "shelf-to-person" methods have been developed in China with good effects. However, the "shelf-to-person" method has a disadvantage that, to take a piece of goods, an entire shelf has to be transported to a picking area, which causes great waste of resources, and only one kind of goods can be transported at a time.

Therefore, it is desired to develop a method for transporting goods by a robot, by which a variety of goods can be transported at a time, so as to improve the transport efficiency of the transport robots.

### SUMMARY

In view of the above disadvantages of the conventional technology, the technical issue to be addressed by the present disclosure is how to improve the transport efficiency of the transport robots. Since it is a container to be transported and the volume and weight of the container are much smaller than the shelf, multiple containers can be transported at a time. Since each container stores at least one type of goods, so multiple types of goods can be transported at a time.

To achieve the above object, a method for transporting goods by a robot is provided by the present disclosure, which includes the following steps 1 to 7.
In step 1, a transport robot and shelves are provided. The transport robot includes a drive unit, a container holder and a container conveying unit, where the drive unit carries the container holder and the container conveying unit to move together. The container holder and the shelves each include one or more container storage spaces.
In step 2, the transport robot automatically moves to a target shelf according to a picking instruction, the container conveying unit picks a container from one of the container storage spaces of the target shelf specified by the picking instruction, and then conveys the container to another container storage space of the container holder specified by the picking instruction.
In step 3, step 2 is repeated, if the picking instruction includes an instruction of picking another container from the same shelf.
In step 4, the transport robot automatically moves to another shelf, and step 2 is repeated, if the picking instruction includes an instruction of picking another container from the another shelf.
In step 5, the transport robot automatically moves to a target shelf according to a storing instruction, the container conveying unit picks a container from one of the container storage spaces of the container holder specified by the storing instruction, and then conveys the container to another container storage space of the shelf specified by the storing instruction.
In step 6, step 5 is repeated, if the storing instruction includes an instruction of storing another container into the same shelf.
In step 7, the transport robot automatically moves to another shelf, and step 5 is repeated, if the storing instruction includes an instruction of storing another container into another shelf.

Further, the container holder may store multiple containers on layers at different heights, and each of the shelves may store multiple containers on layers at different heights.

Further, the containers on layers at different heights of the container holder may be stored on layers at different heights of one of the shelves through the container conveying unit; and the containers on the layers at different heights of the shelves may be stored on layers at different heights of the container holder through the container conveying unit.

Further, the robot may place a container on a layer of the container holder to another layer of the container holder.

Further, the above automatic arrangement may be performed when the robot is moving or not moving.

Further, the transport robot may store a container on a layer of one of the shelves onto a specified layer of the container holder through the container conveying unit, and store a container on another layer of the same shelf onto another specified layer of the container holder through the container conveying unit.

Further, the transport robot may store a container on a layer of one of the shelves onto a specified layer of the container holder through the container conveying unit, and store another container on a layer of another shelf onto a specified layer of the container holder through the container conveying unit.

Further, the transport robot may store a container on a layer of the container holder onto a specified layer of one of the shelves through the container conveying unit, and store a container on another layer of the container holder onto another specified layer of the same shelf through the container conveying unit.

Further, the transport robot may store a container on a layer of the container holder onto a specified layer of one of the shelves through the container conveying unit, and store a container on another layer of the container holder onto a specified layer of another shelf through the container conveying unit.

Further, the transport robot may issue an alarm message when the robot executes the picking instruction but does not obtain any container, or when the robot executes the storing instruction but a target storage space is occupied.

Another method for transporting goods by a robot is provided by the present disclosure, which includes the following steps.

The transport robot automatically moves to a target shelf according to a picking instruction, the container conveying unit picks a container from a container storage space of the target shelf specified by the picking instruction, and then conveys the container to another container storage space of a container holder specified by the picking instruction.

Alternatively, the transport robot automatically moves to a target shelf according to a storing instruction, the container conveying unit picks a container from a container storage space of a container holder specified by the storing instruction, and then conveys the container to another container storage space of the target shelf specified by the storing instruction.

Further, the container holder may store multiple containers on layers at different heights; and a shelf may store multiple containers on layers at different heights.

Further, the containers on layers at different heights of the container holder may be stored on layers at different heights of a shelf through the container conveying unit; and the containers on layers at different heights of a shelf can be stored on the layers at different heights of the container holder through the container conveying unit.

Further, the robot can place a container on a layer of the container holder onto another layer of the container holder.

Further, the above automatic arrangement may be performed when the robot is moving or not moving.

Further, the transport robot may store a container on a layer of a shelf onto a specified layer of the container holder through the container conveying unit, and store a container on another layer of the same shelf onto another specified layer of the container holder through the container conveying unit.

Further, the transport robot may store a container on a layer of a shelf onto a specified layer of the container holder through the container conveying unit, and store a container on a layer of another shelf onto a specified layer of the container holder through the container conveying unit.

Further, the transport robot may store a container on a layer of the container holder onto a specified layer of a shelf through the container conveying unit, and store a container on another layer of the container holder onto another specified layer of the same shelf through the container conveying unit.

Further, the transport robot may store a container on a layer of the container holder onto a specified layer of a shelf through the container conveying unit, and store a container on another layer of the container holder onto a specified layer of another shelf through the container conveying unit.

Further, the transport robot may issue an alarm message when the robot executes the picking instruction but does not obtain any container, or when the robot executes the storing instruction but the target storage space is occupied.

Further, the method may include the following steps.

The process of storing is repeated, if the instruction includes an instruction of storing another container onto the same shelf, or the process of picking is repeated, if the instruction includes an instruction of picking another container from the same shelf.

The transport robot automatically moves to another shelf, and process of storing is repeated, if the instruction includes an instruction of storing another container onto the another shelf; or the transport robot automatically moves to another shelf, and the process of picking is repeated, if the instruction includes an instruction of picking another container from the another shelf.

With the method for transporting goods by a robot according to the present disclosure, multiple types of goods can be transported at a time, having high work efficiency and low energy consumption.

The concept, the specific structure and the technical effects of the present disclosure are further described in conjunction with the drawings in order to fully understand the objects, features and effects of the present disclosure.

### BRIEF DESCRIPTION OF THE DRAWINGS

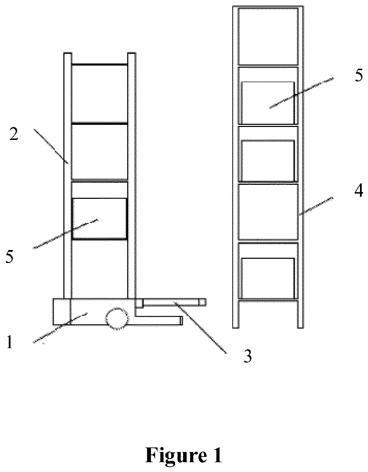

Figure 1 is a schematic diagram of a method for transporting goods by a robot according to a preferred embodiment of the present disclosure.

### Reference numerals in the drawings:

| | |
|---|---|
| 1 drive unit | 2 container holder |
| 3 container conveying unit | 4 shelf |
| 5 container | |

### DETAILED DESCRIPTION OF THE EMBODIMENTS

Figure 1 is a schematic diagram of a method for transporting goods by a robot. The method involves a drive unit 1, a container holder 2 and a container conveying unit 3 mounted on the drive unit 1, a shelf 4, and containers 5 which can be stored in the container holder 2 and the shelf 4.

The container holder 2 may store multiple containers 5 on layers at different heights.

The shelf 4 may store multiple containers 5 on layers at different heights.

The containers 5 on the layers at different heights of the container holder 2 can be stored onto the layers at different heights of the shelf 4 through the container conveying unit 3.

The containers 5 on the layers at different heights of the shelf 4 can be stored onto the layers at different heights of the container holder 2 through the container conveying unit 3.

The robot has a function of automatically moving and can move to any position under drive of the drive unit 1.

The robot has a function of automatically arranging the containers 5. That is, the robot can place a container 5 on a layer of the container holder 2 onto another layer of the container holder 2.

When the robot is in operation, the robot may store a container 5 on any layer of the shelf 4 onto a specified layer of the container holder 2 through the container conveying unit 3, and store another container 5 on another layer of the same shelf 4 onto another specified layer of the container holder 2 through the container conveying unit 3.

When the robot is in operation, the robot may store a container 5 on any layer of the shelf 4 onto a specified layer of the container holder 2 through the container conveying unit 3, and store another container 5 on any layer of another shelf 4 onto a specified layer of the container holder 2 through the container conveying unit 3.

When the robot is in operation, the transport robot may store a container 5 on any layer of the container holder 2 onto a specified layer of the shelf 4 through the container conveying unit 3, and store another container 5 on another layer of the container holder 2 onto another specified layer of the same shelf 4 through the container conveying unit 3.

When the robot is in operation, the robot may store a container 5 on any layer of the container holder 2 onto a specified layer of the shelf 4 through the container conveying unit 3, and store another container 5 on another layer of the container holder 2 onto a specified layer of another shelf 4 through the container conveying unit 3.

The transport robot may issue an alarm message when the robot executes a picking instruction but cannot obtain the container, or when the robot executes a storing instruction but the target storage space is occupied.

The preferred embodiment according to the present disclosure is described above in detail. It should be understood that, according to the concept of the present disclosure, many modifications and changes can be made by those skilled in the art without any creative efforts. Therefore, any technical solution that can be obtained through logic analysis, reasoning or limited experimentation on the basis of the prior art by a person skilled in the art according to the concept of the present disclosure should be within the scope of protection determined by the appended claims.

## Claims

1. A method for transporting goods by a robot, comprising
step 1, providing a transport robot and shelves, wherein the transport robot comprises a drive unit, a container holder and a container conveying unit, and the drive unit is configured to carry the container holder and the container conveying unit to move together, and the container holder and the shelves each comprise one or more container storage spaces;
step 2, automatically moving, by the transport robot, to a first target shelf according to a picking instruction, picking a first container by the container conveying unit from a first container storage space of the first target shelf specified by the picking instruction, and conveying, by the container conveying unit, the first container to a second container storage space of the container holder specified by the picking instruction;
step 3, repeating step 2, if the picking instruction comprises an instruction of picking a second container from the first target shelf;
step 4, automatically moving to a second shelf and repeating step 2, if the picking instruction comprises an instruction of picking a third container from the second shelf;
step 5, automatically moving, by the transport robot, to a second target shelf according to a storing instruction, picking a fourth container by the container conveying unit from a third container storage space of the container holder specified by the storing instruction, and conveying, by the container conveying unit, the fourth container to a fourth container storage space of the second target shelf specified by the storing instruction;
step 6, repeating step 5, if the storing instruction comprises an instruction of storing a fifth container into the second target shelf; and
step 7,automatically moving to a third shelf and repeating step 5, if the storing instruction comprises an instruction of storing a sixth container into the third shelf.

2. The method for transporting goods by a robot according to claim 1, comprising:
storing a plurality of containers on layers at different heights of the container holder, and
storing a plurality of containers on layers at different heights of each of the shelves.

3. The method for transporting goods by a robot according to claim 1, comprising:
storing, by the container conveying unit, the containers on layers at different heights of the container holder onto layers at different heights of any of the shelves, and
storing, by the container conveying unit, the containers on layers at different heights of any of the shelves onto layers at different heights of the container holder.

4. The method for transporting goods by a robot according to claim 1, comprising:
placing, by the transport robot, a container on a layer of the container holder onto another layer of the container holder.

5. The method for transporting goods by a robot according to claim 4, comprising:
performing automatic arrangement by the transport robot when the transport robot is moving or not moving.

6. The method for transporting goods by a robot according to claim 1, comprising:
storing, by the transport robot, a container on a layer of any one of the shelves onto a specified layer of the container holder through the container conveying unit, and
storing, by the transport robot, a container on another layer of the same one of the shelves onto another specified layer of the container holder through the container conveying unit.

7. The method for transporting goods by a robot according to claim 1, comprising:
storing, by the transport robot, a container on a layer of any one of the shelves onto a specified layer of the container holder through the container conveying unit, and
storing, by the transport robot, a container on a layer of another one of the shelves onto a specified layer of the container holder through the container conveying unit.

8. The method for transporting goods by a robot according to claim 1, comprising:
storing, by the transport robot, a container on a layer of the container holder onto a specified layer of one of the shelves through the container conveying unit, and
storing, by the transport robot, a container on another layer of the container holder onto another specified layer of the same one of the shelves through the container conveying unit.

9. The method for transporting goods by a robot according to claim 1, comprising:
storing, by the transport robot, a container on a layer of the container holder onto a specified layer of one of the shelves through the container conveying unit, and
storing, by the transport robot, a container on another layer of the container holder onto a specified layer of another one of the shelves through the container conveying unit.

10. The method for transporting goods by a robot according to claim 1, comprising:
issuing, by the transport robot, an alarm message when the transport robot executes the picking instruction but does not obtain any container, or when the transport robot executes the storing instruction but a target storage space is occupied.

11. A method for transporting goods by a robot, comprising:
automatically moving, by a transport robot, to a target shelf according to a picking instruction, picking a container by a container conveying unit from a container storage space of the target shelf specified by the picking instruction, and conveying the container to another container storage space of a container holder specified by the picking instruction; or
automatically moving, by a transport robot, to a target shelf according to a storing instruction, picking a container by a container conveying unit from a container storage space of a container holder specified by the storing instruction, and conveying the container to another container storage space of the target shelf specified by the storing instruction.

12. The method for transporting goods by a robot according to claim 11, comprising:
storing a plurality of containers on layers at different heights of the container holder, and
storing a plurality of containers on layers at different heights of a shelf.

13. The method for transporting goods by a robot according to claim 11, comprising:
storing, by the container conveying unit, containers on layers at different heights of the container holder onto layers at different heights of a shelf, and
storing, by the container conveying unit, containers on layers at different heights of the shelf onto layers at different heights of the container holder.

14. The method for transporting goods by a robot according to claim 11, comprising:
placing, by the transport robot, a container on a layer of the container holder onto another layer of the container holder.

15. The method for transporting goods by a robot according to claim 14, comprising:
performing automatic arrangement by the transport robot when the transport robot is moving or not moving.

16. The method for transporting goods by a robot according to claim 11, comprising:
storing, by the transport robot, a container on a layer of a shelf onto a specified layer of the container holder through the container conveying unit, and
storing, by the transport robot, a container on another layer of the same shelf onto another specified layer of the container holder through the container conveying unit.

17. The method for transporting goods by a robot according to claim 11, comprising:
storing, by the transport robot, a container on a layer of a shelf onto a specified layer of the container holder through the container conveying unit, and
storing, by the transport robot, a container on a layer of another shelf onto a specified layer of the container holder through the container conveying unit.

18. The method for transporting goods by a robot according to claim 11, comprising:
storing, by the transport robot, a container on a layer of the container holder onto a specified layer of a shelf through the container conveying unit, and
storing, by the transport robot, a container on another layer of the container holder onto another specified layer of the same shelf through the container conveying unit.

19. The method for transporting goods by a robot according to claim 11, comprising:
storing, by the transport robot, a container on a layer of the container holder onto a specified layer of a shelf through the container conveying unit, and
storing, by the transport robot, a container on another layer of the container holder onto a specified layer of another shelf through the container conveying unit.

20. The method for transporting goods by a robot according to claim 11, comprising:
issuing, by the transport robot, an alarm message when the transport robot executes the picking instruction but does not obtain any container, or when the transport robot executes the storing instruction but a target storage space is occupied.

21. The method for transporting goods by a robot according to claim 11, further comprising:
repeating the picking if the instruction comprises an instruction of picking another container from the same shelf, or repeating the storing if the instruction comprises an instruction of storing another container to the same shelf; and
moving automatically to another shelf and repeating the picking if the instruction comprises an instruction of picking another container from the another shelf, or moving automatically to another shelf and repeating the storing if the instruction comprises an instruction of storing another container to the another shelf.
